## Europäisches Patentamt
## European Patent Office
## Office européen des brevets

(19)

(11) Veröffentlichungsnummer: **0 236 389**
**B1**

(12) **EUROPÄISCHE PATENTSCHRIFT**

(45) Veröffentlichungstag der Patentschrift:
02.08.89

(51) Int. Cl.⁴: **C 09 C 1/28**

(21) Anmeldenummer: **86905279.5**

(22) Anmeldetag: **28.08.86**

(86) Internationale Anmeldenummer:
**PCT/EP 86/00505**

(87) Internationale Veröffentlichungsnummer:
**WO 87/01714 (26.03.87 Gazette 87/07)**

(54) **KORROSIONSSCHUTZPIGMENTE AUF DER BASIS VON ZINKSILIKAT SOWIE IHRE HERSTELLUNG UND VERWENDUNG.**

(30) Priorität: **13.09.85 DE 3532806**

(43) Veröffentlichungstag der Anmeldung:
**16.09.87 Patentblatt 87/38**

(45) Bekanntmachung des Hinweises auf die Patenterteilung:
**02.08.89 Patentblatt 89/31**

(84) Benannte Vertragsstaaten:
**DE FR GB**

(56) Entgegenhaltungen:
**US-A-4 317 683**

**Chemical Abstracts, Band 103, Nr. 12, 23. September 1985, (Columbus, Ohio, US), E.V. Bogush et al.: "Synthesis and study of silica-boron oxide-lead monoxide fluxes for ceramic pigments", S. 258, Zusammenfassung Nr. 91878b**

(73) Patentinhaber: **DR. HANS HEUBACH GMBH & CO. KG, Heubachstrasse 1, D-3394 Langelsheim (DE)**

(84) Benannte Vertragsstaaten: **DE FR GB**

(72) Erfinder: **GAWOL, Manfred, Altenauer Strasse 45, D-3392 Clausthal- Zellerfeld (DE)**
Erfinder: **ADRIAN, Gerhard, Talstrasse 20 A, D-3380 Goslar (DE)**

(74) Vertreter: **Patentanwälte Müller- Boré, Deufel, Schön, Hertel, Lewald, Otto, Postfach 26 02 47 Isartorplatz 6, D-8000 München 26 (DE)**

LIBER, STOCKHOLM 1989

EP 0 236 389 B1

## Beschreibung

Die Erfindung betrifft nicht gesundheitsschädliche Korrosionsschutzpigmente, das Verfahren zu ihrer Herstellung und deren Verwendung.

Grundlage bildet Zinksilikat, das mit $B_2O_3$ und ggfs. weitere oxidische Komplexbildern oder Oxiden, die in der Lage sind komplexe Polysäuren bzw. Heteropolysäuren zu bilden, modifiziert ist.

Bei der Herstellung von Korrosionsschützanstrichsystemen werden in vielfältiger Weise Bleipigmente, die eine sehr gut antikorrosive Wirkung haben, eingesetzt.

Neben Bleimennige und Bleisilikochromat findet auch Bleisilikat Verwendung, insbesondere bei Elektrophorese-Beschichtungen in der Automobilindustrie. Die Korrosionsbeständigkeit der auf diese Weise beschichteten Werkstücke wird durch das im abgeschiedenen Festkörper vorhandene Bleisilikat wesentlich verbessert.

Da Bleiverbindungen zu den gesundheitsschädlichen Arbeitsstoffen gehören, wurde die Aufgabe gestellt, Pigmente zu entwickeln, die frei von Bleiverbindungen sind, andererseits aber die gleiche oder eine noch bessere Korrosionsschutzwirkung haben als beispielsweise diese Bleisilikate.

Versuche, das Bleisilikat durch Zinksilikat zu ersetzen, ergaben nicht die geforderte aktive Korrosionsschutzwirkung.

Die gestellte Aufgabe kann gelöst werden durch Korrosionsschutzpigmente auf der Basis von Zinksilikat, hergestellt aus 35 bis 65 Gew.-% ZnO, 15 bis 35 Gew.-% $SiO_2$, 5 bis 20 Gew.-% $B_2O_3$ und 1 bis 20 Gew.-% $WO_3$, das ganz oder teilweise durch $MoO_3$ und/oder $SnO_2$ ersetzt sein kann, wobei die Menge an Zinksilikat, Boroxid und die anderen Metalloxide bzw. deren Hydrate, einzeln oder in Kombination so enthalten sind, daß die Gesamtkombination mit dem Zinksilikat und dem Boroxid wenigstens eines der Oxide $WO_3$, $MoO_3$ und/oder $SnO_2$ in einer Menge enthält, die die Gesamtmenge auf 100 % bringt.

Es zeigte sich, daß durch Zusammenschmelzen der Komponenten der Trägersubstanz Zinksilikat mit den genannten Oxiden einzeln und auch in Kombination Korrosionsschutzpigmente erhalten werden, die in der aktiven Wirkung deutlich besser sind als Zinksilikat allein und gleich gute bzw. bessere Resulate ergeben als das bisher für bestimmte Anwendungsbereiche verwendete Bleisilikat. Das Pigment kann aus ZnO, $SiO_2$ und $B_2O_3$ sowie, das ganz oder teilweise durch $MoO_3$ und oder $SnO_2$ ersetzt sein kann, so daß das Pigment wenigstens 4 Komponenten aufweist, erhalten werden. Soll aber eines oder mehrere der Oxide $WO_3$, $MoO_3$ und $SnO_2$ mitverwendet werden, wird vorzugsweise Bortrioxid in einer Menge von 5 bis 10 Gew.-% eingesetzt. Noch bevorzugter ist ein Anteil von 47 bis 60 Gew.-% ZnO und 15 bis 25 Gew.-% $SiO_2$ und neben Bortrioxid in den oben angegebenen Mengen wenigstens eines der Oxide $WO_3$, $MoO_3$ und $SnO_2$, in einer Menge von 5 bis 10 % für $WO_3$, 5 bis 15 % für $MoO_3$ und 5 bis 10 % für $SnO_2$ enthält.

Die Herstellung erfolgt durch Zusammenschmelzen des Ausgangsmaterials bei einer Temperatur von 1100 bis 1400°C für eine Zeitdauer von 1 bis 3 h, vorzugsweise bei ca. 1200°C für ca. 2 h.

Die dabei erhaltenen Produkte werden nach Abkühlen und Granulieren auf die geforderte Feinheit naßvermahlen, z. B. in einer Kugelmühle oder Schwingmühle. Vorzugsweise wird das Produkt granuliert, in dem es aus dem Schmelzfluß in Wasser eingegossen wird.

Die Naßvermahlung mit ca. 70 % Feststoffgehalt auf die gewünschte Feinheit führt dazu, daß eine partielle Hydrolyse zu hydratwasserhaltigen Molekülen erfolgt, die sich vorteilhaft auf die Entstehung von Haftkomplexen in Kombination mit entsprechenden Bindemitteln und dem Metallsubstrat auswirken können.

Ein Vorteil dieses Prozesses ist außerdem darin zu sehen, daß das Pigment als feststoffreiche Paste erhalten werden kann und auf diese Weise die primäre Teilchengröße und Teilchenfeinheit erhalten bleiben und keine Agglomerate, wie sie bei Trocknungsprozessen auftreten, entstehen können.

Für lösungsmittelhaltige Anwendungsbereiche müssen die Pigmente in Pulverform zur Verfügung stehen. Zu diesem Zweck können die Pigmente nach der Naßvermahlung ohne weiteres getrocknet und nach einem weiteren Aufbereitungsprozeß (Mahlen, Sichten) als feuchtigkeitsfreie Pigmente eingesetzt werden.

Die folgenden Beispiele erläutern die Erfindung und zeigen die Zusammensetzung der modifizierten Zinksilikatpigmente anhand der oxidischen Einsatzmengen.

## Beispiel 1

In der folgenden Tabelle sind die oxidischen Einsatzmengen angegeben, die jeweils in den angegebenen Gewichtsverhältnissen in einem Schmelzofen bei einer Temperatur von 1200°C geschmolzen wurden. Die Schmelze wurde nach Erreichen der Temperatur ca. 2 h bei dieser Temperatur gehalten und nach Durchreaktion wurde die Schmelze in ein Wasserbad gegossen und das entstehende Granulat isoliert.

Das Schmelzgranulat wurde in eine Kugelmühle gebracht und dort mit den üblichen Feststoffgehalten vermahlen. Die Mahldauer richtet sich nach der gewünschten Feinheit, wobei eine obere Teilchengröße von 15 µm erreicht werden muß.

Danach wurde die Mahlpaste auf einen Feststoffgehalt von 70 % eingestellt und in dieser Form für den Anwendungsbereich "wässrige Beschichtungssysteme" eingesetzt.

| ZnO Gewichts % | SiO$_2$ Gewichts % | B$_2$O$_3$ Gewichts % | WO$_3$ Gewichts % | MoO$_3$ Gewichts % | SNO$_3$ Gewichts % |
|---|---|---|---|---|---|
| 59,7 | 22,0 | 18,3 | - | - | - |
| 53,8 | 19,8 | 16,5 | 9,9 | - | - |
| 63,6 | 15,6 | 13,0 | - | 7,8 | - |
| 60,4 | 15,3 | 17,3 | - | - | 7,8 |
| 46,6 | 22,9 | 15,3 | 7,6 | 7,6 | - |
| 41,1 | 25,3 | 17,6 | - | 10,5 | 5,5 |
| 50,4 | 21,3 | 12,4 | 8,8 | - | 7,1 |

Die erfindungsgemäß modifizierten Zinksilikatpigmente wurden in wasserverdünnbaren Bindungsmittelsystemen, insbesondere Elektrotauchgrundierungen, bei Pigmentierungs höhen von 1 - 5, vorzugsweise 3 %, überprüft, wobei festgestellt wurde, daß bei Kurzzeittests (Salzsprühtests-DIN 50021, Schwitzwassertests-DIN 50017) eine sehr gute Korrosionsschutzaktivität festgestellt wurde, die der des bisher eingesetzten Bleisilikats entsprach und in einigen Fällen sogar besser war.

**Beispiel 2**

Es wird wie in Beispiel 1 verfahren und danach der Pigmentschlamm bei 105°C im Hordenwagentrockner getrocknet. Nach der Trocknung werden die Agglomerate mittels einer Turbo- oder Stiftmühle vermahlen und erforderlichenfalls mit einem Windsichter gesichtet.

Nach der Aufbereitung der modifizierten Zinksilikatpigmente zur trockenen Pulverform wurden diese auch in Alkydharz-, Epoxidestern- und 2-Komponenten-Epoxid- und Polyurethan-Systemen bei Pigmentierungshöhen von 5 bis 15 %, vorzugsweise 10 %, wieder in Kurzzeittests überprüft, wobei sich wiederum eine sehr gute Korrosionsschutzwirkung zeigte, die gleich oder besser war als bei Verwendung von Bleisilikat.

Als Mühlen für die Naßvermahlung einerseits und die Trockenvermahlung andererseits eignen sich alle auf diesem Fachgebiet für die Naß- bzw. Trockenvermahlung bekannten Vorrichtungen, wobei bei der Naßvermahlung zur Erzielung großer Feinheit in praktikablen Zeiten ein Feststoffgehalt von ca. 70 % (kleine Abweichung von 2 bis 3 % nach unten und oben) eingehalten werden soll.

**Patentansprüche**

1. Korrosionsschutzpigmente auf der Basis von Zinksilikat, hergestellt aus 35 bis 65 Gew.-% ZnO, 15 bis 35 Gew.-% SiO$_2$, 5 bis 20 Gew.-% B$_2$O$_3$ und 1 bis 20 Gew.-% WO$_3$, das ganz oder teilweise durch MoO$_3$ und/oder SnO$_2$ ersetzt sein kann, wobei die Menge an Zinksilikat, Boroxid und die anderen Metalloxide bzw. deren Hydrate, einzeln oder in Kombination so enthalten sind, daß die Gesamtkombination mit dem Zinksilikat und dem Boroxid wenigstens eines der Oxide WO$_3$, MoO$_3$ und/oder SnO$_2$ in einer Menge enthält, die die Gesamtmenge auf 100 % bringt.

2. Korrosionsschutzpigmente nach Anspruch 1, dadurch gekennzeichnet, daß die Pigmente 40 bis 60 Gew.-% ZnO, 15 bis 25 Gew.-% SiO$_2$, 5 bis 20 Gew.-% B$_2$O$_3$ und wenigstens eines der Oxide WO$_3$, MoO$_3$ und/oder SnO$_2$ in einer Menge von 5 bis 10 % WO$_3$, 5 bis 15 % MoO$_3$ und/oder 5 bis 10 % SnO$_2$ so enthalten, daß die Gesamtmenge 100 % beträgt.

3. Verfahren zur Herstellung der Korrosionsschutzpigmente nach Anspruch 1 oder 2, dadurch gekennzeichnet, daß die Komponenten trocken gemischt und danach einem Schmelzprozeß für eine Zeitdauer von 1 bis 3 h bei einer Temperatur von 1100°C bis 1400°C unterworfen werden.

4. Verfahren nach Anspruch 3, dadurch gekennzeichnet, daß der Schmelzprozeß bei ca. 1200°C ca. 2 h durchgeführt wird.

5. Verfahren nach Anspruch 3 oder 4, dadurch gekennzeichnet, daß das aus dem Schmelzfluß durch Eingießen in Wasser erhaltene Granulat einer Naßvermahlung unterzogen wird.

6. Verfahren nach Anspruch 3, 4 oder 5, dadurch gekennzeichnet, daß die in der wässrigen Phase erhaltenen, gemahlenen Pigmente einem Trocknungs- und Aufbereitungsprozeß unterzogen werden.

7. Verwendung der Korrosionsschutzpigmente nach Anspruch 1 oder 2, in Form der naßvermahlenen Aufschlämmung nach Anspruch 5 für wasserverdünnbare Dispersions- und Elektrophorese-Beschichtungssysteme.

8. Verwendung der Korrosionsschutzpigmente nach Anspruch 1 oder 2 in Form der getrockneten Pulver nach Anspruch 6 für lösungsmittelhaltige Korrosionsschutzbeschichtungssysteme.

## Claims

1. Corrosion inhibiting pigments based on zinc silicate, prepared from 35 - 65 % by weight of ZnO, 15 - 35 % by weight of $SiO_2$, 5 - 20 % by weight of $B_2O_3$ and 1 - 20 % by weight of $WO_3$, entirely or partly substituted by $MoO_3$ and/or $SnO_2$, wherein the amount of zinc silicate, boron oxide and the other metal oxides and their hydrates respectively, singly or in a combination thereof, are such that the entire combination with the zinc silicate and the boron oxide contains at least one of the oxides $WO_3$, $MoO_3$ and/or $SnO_2$ in amounts constituting the balance of 100 %.

2. Corrosion inhibiting pigments according to claim 1, comprising 40 - 60 % by weight of ZnO, 15 - 25 % by weight of $SiO_2$, 5 - 20 % by weight of $B_2O_3$ and at least one oxide from the group consisting of $WO_3$, $MoO_3$ and $SnO_2$ in an amount of 5 - 10 % of $WO_3$, 5 - 15 % of $MoO_3$ and/or 5 - 10 % of $SnO_2$, the amounts constituting the balance of 100 %.

3. A process for the production of corrosion inhibiting pigments according to claims 1 or 2 being characterized in that the components are dry-mixed and then molten together for 1 - 3 hours at a temperature from 1100°C to 1400°C.

4. A process according to claim 3, characterized in that the melting is conducted for about 2 hours at about 1200°C.

5. A process according to claim 3 or 4, wherein a granulate is obtained from the molten mass by pouring it in water and the granulate is subsequently wetcomminuted.

6. A process according to claim 3, 4 or 5, wherein the comminuted pigments obtained in the aqueous phase are dried out and subjected to a preparation treatment.

7. The application of corrosion inhibiting pigments according to claim 1 or 2 in the form of a wet-comminuted suspension of claim 5 for water-dilutable dispersion coatings and electrophoretic coatings.

8. The application of the corrosion inhibiting pigments according to claim 1 or 2 in the form of a dried powder according to claim 6 for solvent-containing corrosion inhibiting coating systems.

## Revendications

1. Pigments anti-corrosion à base de silicate de zinc préparés à partir de 35 à 65 % en poids de ZnO, 15 à 35 % en poids de $SiO_2$, 5 à 20 % en poids de $B_2O_3$ et 1 à 20 %, en poids de $WO_3$ pouvant être totalement ou en partie remplacé par $MoO_3$ et/ou $SnO_2$, la quantité de silicate de zinc, celle d'oxyde de bore et des autres oxydes métalliques ou leurs hydrates, seules ou en combinaison sont telles que la combinaison totale de silicate de zinc et d'oxyde de bore renferme au moins l'un des oxydes $WO_3$, $MoO_3$ et/ou $SnO_2$ en une quantité qui amène la quantité totale à 100 %.

2. Pigments anti-corrosion selon la revendication 1, caractérisés en ce que les pigments contiennent de 40 à 60 % en poids de ZnO, 15 à 25 % en poids de $SiO_2$, 5 à 20 % en poids de $B_2O_3$ et au moins un des oxydes $WO_3$, $MoO_3$ et/ou $SnO_2$ en une quantité allant de 5 à 10 % de $WO_3$, 5 à 15 % de $MoO_3$ et/ou 5 à 10 % de $SnO_2$, de façon à ce que la quantité totale s'élève à 100 %.

3. Procédé de préparation des pigments anti-corrosion selon la revendication 1 ou 2, caractérisé en ce que les constituants sont mélangés à sec et ensuite soumis à un processus de fusion pendant une durée de 1 à 3 h, à une température de 1100°C à 1400°C.

4. Procédé suivant la revendication 3, caractérisé en ce que le processus de fusion est conduit à environ 1200°C pendant environ 2h.

5. Procédé suivant la revendication 3 ou 4, caractérisé en ce que le granulat, obtenu par coulage de la matière fondue dans de l'eau, est soumis à un broyage humide.

6. Procédé suivant la revendication 3, 4, ou 5, caractérisé en ce que les pigments broyés obtenus dans la phase aqueuse sont soumis à un processus de séchage et de traitement.

7. Utilisation des pigments anti-corrosion selon la revendication 1 ou 2, sous la forme de la suspension après broyage humide suivant la revendication 5 pour des systèmes de revêtement à dispersion et électrophorèse, diluables à l'eau.

8. Utilisation des pigments anti-corrosion selon la revendication 1 ou 2 sous forme de la poudre sèche obtenue suivant la revendication 6 pour des systèmes de revêtement anti-corrosion contenant des solvants.

4